Europäisches Patentamt

European Patent Office

Office européen des brevets

(19)

(11) Veröffentlichungsnummer: **0 514 634 A1**

# (12) EUROPÄISCHE PATENTANMELDUNG

(21) Anmeldenummer: **92103973.1**

(22) Anmeldetag: **09.03.92**

(51) Int. Cl.5: **G01D 3/02**, G01D 18/00

(30) Priorität: **22.05.91 DE 4116666**

(43) Veröffentlichungstag der Anmeldung:
**25.11.92 Patentblatt 92/48**

(84) Benannte Vertragsstaaten:
**AT BE CH DE DK ES FR GB GR IT LI LU NL PT SE**

(71) Anmelder: **GEA Happel Klimatechnik GmbH**
**Südstrasse 48**
**W-4690 Herne 2(DE)**

(72) Erfinder: **Linker, Helmut**
**Detmolder Ring 47**
**W-4690 Herne 2(DE)**

(74) Vertreter: **Patentanwaltsbüro Cohausz &**
**Florack**
**Schumannstrasse 97**
**W-4000 Düsseldorf 1(DE)**

(54) **Verfahren zur Korrektur von Messfehlern.**

(57) Die Erfindung betrifft ein Verfahren zur Korrektur von Meßfehlern eines Meßdatenerfassungssystems, bei der analoge Meßsignale einer digitalen, mikroprozessorgesteuerten Meßwertauswertung zugeführt werden, wobei die Meßfehler während der Auswertung der Meßsignale mittels einer mathematischen Funktion, insbesondere Operation, berichtigt werden, deren Parameter durch an für die Korrekturgleichung charakteristischen Meßpunkten mittels Meßnormalen vor der ersten Inbetriebnahme der Meßvorrichtung ermittelt und in einem nichtflüchtigen Speicher des Meßdatenerfassungssystems abgelegt werden.

FIG. 2

EP 0 514 634 A1

Die Erfindung betrifft ein Verfahren zu Korrektur von Meßfehlern eines Meßdatenerfassungssystem, bei der analoge Meßsignale einer digitalen, mikroprozessorgesteuerten Meßwertauswertung zugeführt werden.

In Meßdatenerfassungssystemen werden die Meßgrößen durch Sensoren erfaßt, die ein Meßsignal abgeben. Dieses Meßsignal wird einem Meßwandler oder -umformer zugeführt, welcher Eingangsklemmen für die Sensoren, Eingangsschaltungen - oft als Brückenschaltungen ausgeführt-, Präzisionsverstärker Signalrückkopplungen, Ausgangsschaltungen und eine Versorgungselektronik aufweist. Die durch die Ausgangsschaltungen des Meßwandlers abgegebenen Ausgangssignale werden einem n-BIT A/D-Wandler zugeführt, um anschließend als digitale Informationen in einer mikroprozessorgesteuerten Meßwertauswertung weiter verarbeitet werden zu können.

Jede der einzelnen Baustufen des Meßwandlers, des n-BIT A/D-Wandlers und der Meßwertauswertung führt aufgrund von Bauteiltoleranzen zu einer Verfälschung des Meßsignals bei dessen Verstärkung, Umwandlung und Auswertung.

Die Summe dieser Verfälschungen führt schließlich zu einem stark fehlerbehafteten Ergebnis der Auswertung des Meßsignals.

Die Verfälschung des Meßsignals bei der Verstärkung und Umwandlung macht es bisher erforderlich, vor jeder mit der Vorrichtung ausgeführten Messung den Meßwandler oder -umformer und den n-BIT A/D-Wandler zu kalibrieren. Diese Notwendigkeit führt neben dem hohen zeitlichen und personellen Aufwand für das Kalibrieren zu einem großen schaltungstechnischen Aufwand bei der Auslegung der Meßwandler/-umformer oder n-BIT A/D-Wandler, da aufgrund der unterschiedlichen Charakteristik der fehlerbehafteten Baustufen für jede einzelne dieser Baustufen eine Möglichkeit der Kompensation der jeweiligen Fehlerquelle vorgesehen sein muß. Darüber hinaus ist es mit einem solchen Kalibrierverfahren nicht möglich, die durch die mikroprozessorgesteuerte Meßwertauswertung selbst verursachten Fehler zu beseitigen. Dies erweist sich im praktischen Einsatz besonders bei hochgenauen Messungen als nachteilig.

Die Aufgabe der Erfindung besteht daher darin, ein Verfahren zur Korrektur von Meßfehlern einer Meßvorrichtung und Meßwertauswertung anzugeben, durch das bei möglichst geringem Zeitaufwand für die Kalibrierung eine Kompensation aller Fehlerquellen des aus Meßvorrichtung und -auswertung gebildeten Meßdatenerfassungssystems und gleichzeitig eine Reduzierung des schaltungstechnischen Aufwandes ermöglicht wird.

Diese Aufgabe wird erfindungsgemäß dadurch gelöst, daß die Meßfehler während der Auswertung der Meßsignale mittels einer mathematischen Funktion, insbesondere Operation berichtigt werden, deren Parameter durch an für die Korrekturgleichung charakteristischen Meßpunkten mittels Meßnormalen vor der ersten Inbetriebnahme der Meßvorrichtung ermittelt und in einem nichtflüchtigen Speicher des Meßdatenerfassungssystems abgelegt werden.

Indem die Meßfehler durch die mikrozessorgesteuerte Meßwertauswertung selbst korrigiert werden, ist nur noch eine einmalige Kalibrierung des gesamten Meßdatenerfassungssystem nötig. Dadurch wird der zeitliche wie personelle Aufwand für das Kalibrieren auf ein Minimum reduziert.

Während des späteren Betriebs werden automatisch alle durch die Baustufen der Meßwandler/-umformer des n-BIT A/D-Wandlers oder der Meßwertauswertung verursachten Fehler berichtigt, indem der Fehler des Meßergebnisses durch eine mathematische Operation mit dem aus der Größe des Meßergebnisses berechneten Wert der Korrekturgleichung aufgehoben wird. Auf diese Weise kann auf jede zusätzliche Schaltung für die Kompensation der Fehlerquellen oder einer weiteren Kalibrierung dieser Baustufen von Hand verzichtet werden.

Die Bestimmung der Parameter der Korrekturgleichung und die Berechnung der Korrekturwerte läßt sich in einer mikroprozessorgesteuerten Meßwertauswertung dann besonders leicht und schnell ausführen, wenn die mathematische Korrekturfunktion eine Gleichung n-ten Grades ist. Dabei kann die Korrekturfunktion so ausgelegt sein, daß die aus der Korrekturgleichung berechneten Korrekturwerte zu den gemessenen Werten addiert werden.

Die Bestimmung der Parameter der Korrekturgleichung n-ten Grades ist besonders einfach, wenn die Parameter der Korrekturfunktion durch Messungen an mindestens $n+1$ von einander verschiedenen Meßnormalen ermittelt werden.

Als Korrekturgleichung kann eine beliebige, auf die Charakteristik der Meßsignale, der Meßfehler und der durch den n-BIT A/D-Wandler erzeugten Verlauf der digitalen Meßdaten angepaßte Korrekturgleichung n-ten Grades gewählt werden. Deren Parameter werden, beispielsweise werkseitig vor Auslieferung des Meßdatensystems, durch einen einmaligen Meßvorgang an verschiedenen Meßpunkten von Meßnormalen bestimmt. Da die so ermittelten Parameter in einem nicht flüchtigen Speicher der Meßauswertung abgelegt werden, sind sie für alle folgenden Meßvorgänge als Parameter der Korrekturgleichung abrufbar.

Liegt ein linearer Verlauf der Meßdaten vor, so ist es besonders günstig, wenn als Korrekturgleichung eine lineare Gleichung gewählt wird, deren Parameter durch die Soll-/Ist-Abweichung jeweils einer Messung an einem Meßnormal an der oberen oder unteren Grenze des Meßbereichs vor Ineinsatznahme der Meßvorrichtung bestimmt werden.

Das erfindungsgemäße Verfahren zur Korrektur von Meßfehlern ist besonders geeignet für Meßvorrichtungen, die die Meßgrößen Temperatur, Druck, Feuchte, Strom oder Spannung messen.

Im folgenden soll die Erfindung anhand eines Beispiels näher erläutert werden.

Es zeigen:

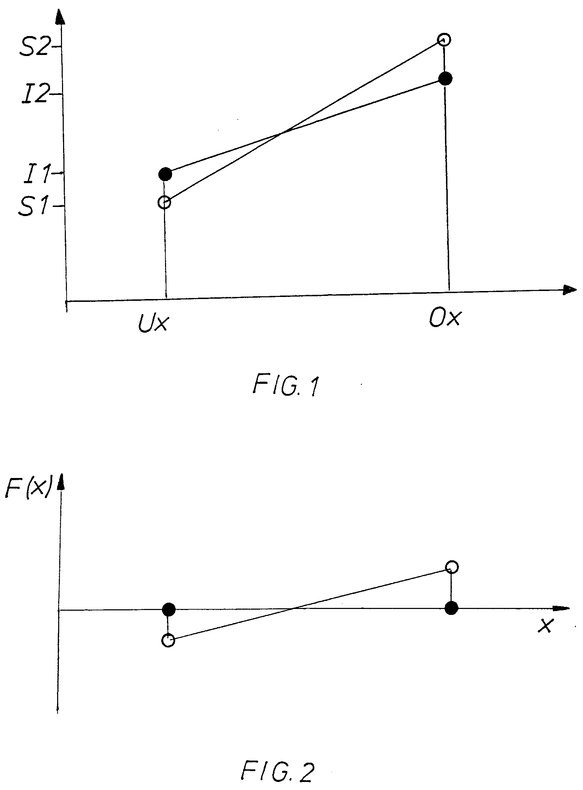

Fig.1 ein Diagramm, in dem der Verlauf der fehlerbehafteten Ist und der Soll-Werte aufgetragen ist;

Fig.2 den Verlauf einer linearen Korrekturgleichung zur Korrektur der fehlerbehafteten Meßwerte nach Fig.1.

Nach der Montage eines Meßdatenerfassungssystems für Meßwert deren Meßdaten einen linearen Verlauf aufweisen, wird zur Kalibrierung des Meßdatenerfassungssystems an einem Meßnormal eine erste Messung an der unteren Grenze Ux des Meßbereichs des Meßdatenerfassungssystems durchgeführt. Anschließend wird an der oberen Grenze Ox des Meßbereichs des Meßwerterfassungssystems eine zweite Messung durchgeführt. In einem dritten Schritt wird dann das Ergebnis I1 der ersten Messung mit dem Sollwert S1 des Meßnormals an der unteren Grenze Ux des Meßbereichs und das Ergebnis der zweiten Messung I2 mit der tatsächlichen Größe S2 des Meßnormals an der oberen Grenze Ox des Meßbereichs verglichen und aus diesem Vergleich die Parameter A, B der linearen Korrekturgleichung $F(X) = A + X \times B$ bestimmt.

Bei allen folgenden Messungen wird nun zu dem Ergebnis X der Meßauswertung das in Abhängigkeit von diesem Wert X bestimmte Ergebnis der Korrekturgleichung F(X) vor der Ausgabe des Meßergebnisses hinzu addiert.

## Patentansprüche

1. Verfahren zur Korrektur von Meßfehlern eines Meßdatenerfassungssystems, bei der analoge Meßsignale einer digitalen, mikroprozessorgesteuerten Meßwertauswertung zugeführt werden,
   **dadurch gekennzeichnet,** daß die Meßfehler während der Auswertung der Meßsignale mittels einer mathematischen Funktion, insbesondere Operation, berichtigt werden, deren Parameter durch an für die Korrekturgleichung charakteristischen Meßpunkten mittels Meßnormalen vor der ersten Inbetriebnahme der Meßvorrichtung ermittelt und in einem nichtflüchtigen Speicher des Meßdatenerfassungssystems abgelegt werden.

2. Verfahren zur Korrektur von Meßfehlern einer Meßvorrichtung, nach Anspruch 1,
   **dadurch gekennzeichnet,** daß die mathematische Korrekturfunktion eine Gleichung n-ten Grades ist.

3. Verfahren zur Korrektur von Meßfehlern einer Meßvorrichtung nach Anspruch 1 und 2,
   **dadurch gekennzeichnet,** daß die aus der Korrekturgleichung berechneten Korrekturwerte zu den gemessenen Werten addiert werden.

4. Verfahren zur Korrektur von Meßfehlern einer Meßvorrichtung, nach Anspruch 2 bis 3.
   **dadurch gekennzeichnet,** daß die Parameter der Korrekturfunktion durch Messungen an mindestens n + 1 von einander verschiedenen Meßnormalen ermittelt werden.

5. Verfahren zur Korrektur von Meßfehlern nach Anspruch 1, **dadurch gekennzeichnet,** daß die Korrekturfunktion eine lineare Gleichung ist, deren Parameter durch die Soll-/ Ist-Abweichung jeweils einer Messung an einem Meßnormal an der oberen und unteren Grenze des Meßbereichs bestimmt werden.

6. Verfahren zur Korrektur von Meßfehlern nach einem der vorhergehenden Ansprüche,
   **dadurch gekennzeichnet,** daß durch die Meßvorrichtung die Meßgrößen Temperatur, Druck, Feuchte, Strom oder Spannung meßbar sind.

FIG. 1

FIG. 2

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 603 831 (ROBERT BOSCH GMBH) * Seite 4, Zeile 22 - Seite 9, Zeile 11 * | 1,6 | G01D3/02 G01D18/00 |
| Y | | 2-5 | |
| | --- | | |
| Y | DE-A-3 128 095 (HARTMANN & BRAUN AG) * Seite 10, Zeile 11 - Seite 11, Zeile 8 * | 2,4 | |
| | --- | | |
| Y | IBM TECHNICAL DISCLOSURE BULLETIN Bd. 15, Nr. 6, November 1972, Seiten 1869 - 1870; SOYCHAK ET AL.: 'General Purpose Monolithic Memory Linearizer' * das ganze Dokument * | 3 | |
| | --- | | |
| Y | US-A-4 812 747 (GALE ET AL) * Abbildung 1 * | 5 | |
| | ----- | | |

| | |
|---|---|
| | **RECHERCHIERTE SACHGEBIETE (Int. Cl.5)** |
| | G01D |

Der vorliegende Recherchenbericht wurde für alle Patentansprüche erstellt

| Recherchenort | Abschlußdatum der Recherche | Prüfer |
|---|---|---|
| DEN HAAG | 15 JULI 1992 | LUT K. |